# EUROPÄISCHE PATENTSCHRIFT

(11) **EP 1 052 388 B1**
(45) Veröffentlichungstag und Bekanntmachung des Hinweises auf die Patenterteilung: **05.11.2008**
(21) Anmeldenummer: 00109502.5
(22) Anmeldetag: 04.05.2000
(51) Int. Cl.: F02D 31/00

(54) **Verfahren zur Drehzahlvorgabe an einem Antriebsmotor an einer Arbeitsmaschine**
Method to set the engine rotation speed of a working machine
Méthode pour déterminer la vitesse de rotation d'un engin de travail

(30) Priorität: 12.05.1999 DE 19921697
(43) Veröffentlichungstag der Anmeldung: 15.11.2000
(73) Patentinhaber: CLAAS Selbstfahrende Erntemaschinen GmbH, 33428 Harsewinkel (DE)
(72) Erfinder: Isfort, Heinrich, 48249 Dülmen (DE); Pollklas, Manfred, 33378 Rheda-Wiedenbrück (DE)

(56) Entgegenhaltungen:
- EP-A- 0 391 029
- EP-A- 0 408 170
- DD-A- 200 234
- DE-A- 3 345 679
- US-A- 4 553 626
- US-A- 5 335 750
- PATENT ABSTRACTS OF JAPAN vol. 1995, no. 09, 31. Oktober 1995 (1995-10-31) & JP 07 158474 A (TOYO UMPANKI CO LTD), 20. Juni 1995 (1995-06-20)

## Beschreibung

Das Verfahren zur Drehzahlvorgabe an einem Verbrennungsmotor an Arbeitsmaschinen bezieht sich auf alle Arbeitsmaschinen, die im Arbeitsbetrieb mit einer konstanten Motordrehzahl betrieben werden. Insbesondere findet das Verfahren an selbstfahrenden landwirtschaftlichen Erntemaschinen, wie Feldhäckslern oder Mähdreschern Anwendung (siehe z.B. US-A-5 335 750).

Arbeitsmaschine besitzen in der Regel einen Verbrennungsmotor, der die einzelnen Arbeitsorgane antreibt und zusätzlich die Antriebsleitung für den Fahrantrieb zu Verfügung stellt. Die verwendeten Motoren werden in ihrer Leistung auf die benötigten Leistungen im Arbeitsprozeß ausgelegt. Diese ist bei Arbeitsmaschinen wie Bagger, Krane oder Erntemaschinen viel größer als für den Fahrantrieb benötigt wird. Während des Arbeitsprozesses werden die Motoren mit einer Drehzahl betrieben, die eine optimale Ausnutzung der Antriebsleistung gewährleisten, wobei die Drehzahlvorgabe in der Regel konstant ist. Ist es für den Arbeitsprozeß außerdem notwendig, daß sich die Arbeitsmaschine mit unterschiedlicher Fahrgeschwindigkeit fortbewegt, sind die Maschinen mit einem Fahrantrieb ausgestattet, der sich in seiner Abtriebsdrehzahl unabhängig von der Motordrehzahl verstellen läßt. Bekannterweise werden die Fahrantriebe als eine Hydraulikpumpen/- motoreinheit oder eine Variatoreinheit ausgebildet. Die Fahrgeschwindigkeitsänderung wird durch eine Veränderung der Förderleistung der Hydraulikpumpe und/ oder durch eine Veränderung des Schluckvolumens des Hydraulikmotors erreicht. Den jeweiligen Antriebselementen, kann zur Erhöhung des Wirkungsgrades, eine Getriebeschaltstufe nachgeschaltet werden. Diese Getriebe können bekanntlich durch ein Stellhebel oder auch automatisiert geschaltet werden und dienen vielfach, in Verbindung mit einem Variatorfahrantrieb, auch zur Fahrtrichtungsumkehr der Arbeitsmaschine.

Die Drehzahl eines Verbrennungsmotors wird durch die Variation der Kraftstoffeinspritzmenge gesteuert. Diese Verstellung kann durch mechanische Stellhebel, elektromotorische Stellspindeln, elektropneumatisch, elektrohydraulisch oder auch neuerdings mittels einer elektronisch gesteuerten Kraftstoffeinspritzung vorgenommen werden. Bei Arbeitsmaschinen wird die Verstellung der Motordrehzahl in Stufen und um Arbeiten mit einer falschen Motordrehzahl zu vermeiden, vielfach nur in zwei Stufen ausgeführt, so daß die Motordrehzahl nur zwischen der Leerlaufdrehzahl und der maximalen, für den Arbeitsprozeß notwendige Drehzahl vorgewählt werden kann. Für die Transport- oder Straßenfahrt ergeben sich dann zwei Fahrgeschwindigkeitsbereiche, mit der eine Transport- oder Straßenfahrt ausgeführt werden kann, nämlich die Fahrt mit Motorleerlaufdrehzahl oder mit Arbeitsmotordrehzahl. Bei der Verwendung der Motorleerlaufdrehzahl bei Transport- oder Straßenfahrt kann es vorkommen, daß die Antriebsleistung des Motors in bestimmten Fällen nicht ausreicht und der Motor dann abgewürgt wird. Es ist daher in der Regel vorgesehen die Transport- oder Straßenfahrt mit maximaler Motordrehzahlvorgabe beziehungsweise mit Arbeitsmotordrehzahl auszuführen. Dies hat den Nachteil, daß der Motor der Arbeitsmaschine bei einer Transport- oder Straßenfahrt unnötige, ungenutzte Antriebsleistung erzeugen, was wiederum zu unnötigem Kraftstoffverbrauch führt und außerdem die Umwelt mit Lärm belästigt.

Aus der DD 200 234 ist eine Verfahren an selbstfahrenden Arbeitsmaschinen zur Verringerung des Kraftstoffverbrauches während des Transportzustandes bekannt, bei welchem der Kraftstoffverbrauch des Antriebsmotors während des Transportes durch eine automatisch, gegenüber der Nenndrehzahl abgesenkte, konstante Motordrehzahl verringert wird. Die Transportgetriebestufe wird dafür so ausgelegt, daß die maximal zulässige Fahrgeschwindigkeit bei einer verringerten Motordrehzahl erreicht werden kann. Der Fahrzeugbediener wählt dann vor dem Transport die um einen gewissen Betrag verringerte Motordrehzahl per Handverstellung vor und schaltet dann die Transportgetriebestufe ein. Eine Sperrvorrichtung verhindert die unzulässige Einlegung der Transportgetriebestufe bei Motornenndrehzahl. In einer weiteren Ausgestaltung des Verfahrens, wird die Stellung des Schalthebels zur Vorwahl der Transportgetriebestufe abgefragt und bei dem Einlegen der Transportgetriebestufe die Motordrehzahl automatisch auf eine verringerte Motordrehzahl abgesenkt, bei welcher der Motor den maximalen Antriebsleistungsbedarf für den Transport abgibt.

Durch das vorgeschlagene Verfahren wird der Kraftstoffbedarf verringert, dennoch wird die Motordrehzahl beim Transport nur für eine Antriebsleistung optimal reduziert. Die Arbeitsmaschine verbraucht im Stillstand oder bei geringere Antriebsleistungsanforderung unnötig Kraftstoff und erzeugt ferner unnötigen Lärm.

Es ist daher Aufgabe der Erfindung den Kraftstoffverbrauch und die Lärmbelästigung bei Transport- oder Straßenfahrt entsprechend optimal an die Anforderungen anzupassen.

Die Aufgabe wird durch ein Verfahren gemäß Anspruch 1 zur Drehzahlvorgabe eines Motors an Arbeitsmaschinen gelöst, indem die Drehzahlvorgabe an den Antriebsmotors bei Transport- oder Straßenfahrt automatisch in Abhängigkeit der Vorgabe der Fahrgeschwindigkeit erfolgt.
Durch diese Lösung ist es erstmalig möglich den Kraftstoffverbrauch und die Lärmbelästigung bei Transport- oder Straßenfahrt auf ein erträgliches Maß zu reduzieren. Dem Bediener der Arbeitsmaschine steht zur Vorgabe der Motordrehzahl ein Bedienelement, wie beispielsweise ein Schalter in dem Armaturenbrett, zur Verfügung. Hat die Arbeitsmaschine den Arbeitsprozeß beendet und wird diese dann mittels des eigenen Fahrantriebs zu der nächsten Arbeitsstelle befördert, kann der Maschinenbediener mittels des Schalters die Art der Vorgabe der Motordrehzahl nach der erfinderischen Weise vorwählen. Die Motordrehzahlvorgabe erfolgt dann automatisch durch die Vorgabe der Fahrgeschwindigkeit. Diese kann durch ein Fußpedal, einen Stellhebel, einen Fahrhebel oder auch durch eine elektronische Vorgabe per Tastendruck an einem Fahrhebel erfolgen.
In der einfachsten Ausführungsform der Erfindung ist es so vorgesehen, daß die Motordrehzahl von einer höheren Motordrehzahl zu der Leerlaufdrehzahl des Antriebsmotors wechselt, wenn der Stillstand des Arbeitsfahrzeuges vorgewählt wird. Dies verringert zum Beispiel bei einem Halt der Arbeitsmaschine an einer Einfahrt oder bei einem Ampelstopp den Kraftstoffverbrauch und zusätzlich die Lärmbelästigung von außerdem an der Einfahrt oder Ampel wartenden Fahrzeuge. Veranlaßt der Fahrzeugbediener durch beispielsweise die Betätigung des Fahrpedals ein Anfahren der Arbeitsmaschine, so wird die Motordrehzahlvorgabe automatische von der Leerlaufdrehzahl auf eine höhere Drehzahlvorgabe erhöht.

Besonders Vorteilhaft ist die Vorgabe der Motordrehzahl in Abhängigkeit einer Stellung eines Fahrhebels in einer Arbeitsmaschine. Mittels dieses Fahrhebels wird beispielsweise die Förderleistung einer Hydraulikpumpe über einen Bowdenzug oder über eine elektrohydraulisch Verstellung verstellt. Bewegt der Maschienenbediener den Fahrhebel bei einer Transport- oder Straßenfahrt in seine Neutralstellung, wird dies von einem Schalter erkannt und die Motordrehzahl automatisch abgesenkt. Die Absenkung der Drehzahl muß nicht zwingend bis auf die Leerlaufdrehzahl erfolgen, so daß bei einem nachfolgenden Anfahren der Arbeitsmaschine schon eine höhere Motordrehzahl zur Verfügung steht.

An Arbeitsmaschinen, bei denen die Fahrgeschwindigkeitsvorgabe entkoppelt, beispielsweise durch eine elektronisch geregelte Verstellpumpe, von den Antriebselementen vorgenommen werden kann, ist es außerdem möglich, eine geänderte Vorgabe der Fahrgeschwindigkeit entweder durch eine geänderte Motordrehzahl und/ oder durch eine geänderte Förderleistung der Hydraulikpumpe auszuführen. Es ist hierbei möglich in einem bestimmten Fahrgeschwindigkeitsbereich durch eine Motordrehzahländerung und in einem anderen oder in dem sich anschließenden Fahrgeschwindigkeitsbereich durch eine Veränderung der Förderleistung auf eine geänderte Fahrgeschwindigkeitsvorgabe zu reagieren. Desweiteren kann das Verhältnis zwischen Fördermenge und Motordrehzahl den Leistungsanforderungen des Fahrantriebes angepaßt ausgewählt werden, so das immer der optimale Kraftstoffverbrauch und/oder die minimalste Lärmbelästigung entsteht. Für die Ermittlung der erforderlichen Antriebsleistung kann bei einem hydrostatischem Fahrantrieb, die Drehzahlvorgabe an den Antriebsmotor und die Fördermenge der Verstellpumpe beziehungsweise das Schluckvolumen des Verstellmotors, anhand des Druckes im Hydrauliksystem bestimmt werden. Bei einer sich erhöhenden Antriebsleistungsanforderung wird dann die Drehzahlvorgabe des Antriebsmotors erhöht und gleichzeitig die Fördermenge der Antriebspumpe verringert beziehungsweise das Schluckvolumen des Antriebsmotors erhöht. Dies erfolgt automatisch in vorgegebenen Bereichen so lange, bis die Fahrgeschwindigkeitsvorgabe bestmöglichst von der Arbeitsmaschine erreicht wird. Bei einer Verringerung der Antriebsleistungsanforderung des Fahrantriebes, wird, entsprechend dem zuvor beschriebenen Verfahren bei einer Antriebsleistungserhöhung, in umgekehrter Weise verfahren.

In einer weiteren Ausgestaltung der Erfindung ist es erfindungsgemäß so vorgesehen, daß die Drehzahlvorgabe des Antriebsmotors so vorgegeben wird, daß die Fahrgeschwindigkeitsvorgabe der Arbeitsmaschine proportional der Fahrhebelstellung ist. Der Vorteil dieses Verfahrens liegt in dem für den Bediener gewohnten Verhalten der Arbeitsmaschine, nach einer Veränderung der Fahrgeschwindigkeitsvorgabe. Die Maschine reagiert dann ähnlich einem Kraftfahrzeug. Mit dieser Lösung der Erfindung können außerdem Unlinearitäten zwischen der Fahrhebelstellung und der Ansteuerung des Fahrantriebes, durch eine entsprechend, programmierte Kennlinie für die Motordrehzahl ausgeglichen werden.

Selbstfahrende landwirtschaftliche Erntemaschinen sind in der Regel im Fahrantriebsstrang mit einem Getriebe ausgestattet. Hierdurch kann der hydrostatische Antriebsteil beziehungsweise der Variator kostengünstiger ausgeführt werden. Die erreichbare maximale Fahrgeschwindigkeit der Arbeitsmaschine wird daher auch von dem ausgewählten Fahrbereich bestimmt. Eine Arbeitsmaschine besitzt mehrere Fahrbereiche, die entsprechend der erforderlichen Fahrgeschwindigkeiten im Arbeitseinsatz und außerdem für die Transport- und Straßenfahrt ausgelegt sind. Die Fahrbereiche für den Arbeitseinsatz unterscheiden sich von den für die Transport- und Straßenfahrt genutzten Fahrbereichen durch unterschiedliche, schaltbare Übersetzungen des Getriebes und unter anderem auch durch verschiedene, vorwählbare Hydrostateinstellungen.

In einer besonders vorteilhaften Ausgestaltung der Erfindung wird die Drehzahlvorgabe des Antriebsmotors nur bei der Auswahl der für die Transport- oder Straßenfahrt vorgesehenen Fahrbereiche von der Fahrhebelstellung automatisch vorgegeben. Die Auswahl des Verfahrens für die Art der Drehzahlvorgabe wird dadurch automatisiert vorgenommen und stellt eine weitere Erleichterung für den Maschinenbediener dar. Der ausgewählte Fahrbereich kann durch bekannte Mittel, wie beispielsweise durch einen Schalter an dem Schaltgestänge oder im Getriebe für den Fahrantrieb, der den gewählten Fahrbereich abfragt oder aus einem Ansteuersignal für den Hydrostaten (Vorwahl von unterschiedlichen Förder- beziehungsweise Schluckvolumenbereichen) abgeleitet werden.

In einer weiteren Ausgestaltung der Erfindung erfolgt die Drehzahlvorgabe des Antriebsmotors nur in der Vorfahrtsrichtung der Arbeitsmaschine in Abhängigkeit der Vorgabe der Fahrgeschwindigkeit. Besonderes vorteilhaft ist dies für Arbeitsmaschinen, die mittels des Fahrhebels in verschiedene Antriebsrichtungen gesteuert werden können. Vielfach muß der Bediener der Arbeitsmaschine, bei einer Rückwärtsfahrt mittels Hilfseinrichtungen, wie beispielsweise einen Spiegel, den rückwärtigen Bereich überwachen. Dies wird dann vorzugsweise mit einer geringen Fahrgeschwindigkeit und bei einer niedrigen Motordrehzahl ausgeführt, so daß außerdem noch auf eventuelle, akustische Signale einer einweisenden Person geachtet werden kann. Durch das vorgeschlagene Verfahren wird die sonst vom Maschinenbediener per Hand eingestellte niedrige Motordrehzahl automatisch eingestellt und ist somit eine weitere Erleichterung für den Maschinenbediener und außerdem wird eine verringerte Lärmbelästigung der Umwelt erreicht.

In eines weiteren Ausgestaltung der Erfindung wird nach einem erkannten Wechsel der Arbeitsmaschine, aus dem Arbeitsbetrieb in den Transport- oder Straßenbetrieb, automatisch die Leerlaufdrehzahl des Antriebsmotors vorgegeben. In der Regel wird nach einem Arbeitsbetrieb die Arbeitsmaschine für den Transport zu dem nächsten Arbeitsfeld oder für die Straßenfahrt vorbereitet. Hierzu werden Sicherheitseinrichtungen, wie Begrenzungsleuchten und Schutzeinrichtungen von Hand an Einrichtungen der Arbeitsmaschine angebaut. Damit das Arbeitsfahrzeug dabei nicht unnötig Kraftstoff verbraucht und außerdem die Umwelt mit Lärm belästigt, wird die Drehzahlvorgabe an den Antriebsmotor nach dem beschriebenen Verfahren automatisch abgesenkt. Der Wechsel der Arbeitsmaschine, aus dem Arbeitsbetrieb in den Transport- oder Straßenbetrieb kann anhand von Einstellungen des Maschinenbedieners an der Arbeitsmaschine beziehungsweise aus den Parametern der Arbeitsmaschine erkannt werden. Desweiteren ergibt sich durch das Verfahren der Vorteil, daß sich hierdurch eine definierte Ausgangseinstellung für weitere sich von dem Arbeitsbetrieb unterscheidende Motordrehzahlsteuerungen im Transport- oder Straßenbetrieb ergibt.

Eine weitere Ausgestaltung der Erfindung ergibt sich dadurch, daß nach einem erkannten Wechsel der Arbeitsmaschine aus dem Transport- oder Straßenbetrieb in den Arbeitsbetrieb, automatisch die Leerlaufdrehzahl des Antriebsmotors vorgegeben wird. Bei diesem Verfahren wird dann während der Rüstzeit der Arbeitsmaschine für den Arbeitsbetrieb Kraftstoff eingespart und die Umwelt nicht unnötig mit Lärm belästigt. Fährt die Arbeitsmaschine beispielsweise mit hoher Motordrehzahl in ein Feldstück ein, wird in der Regel die Arbeitsmaschine vor dem Arbeitsbeginn zum Stillstand gebracht, Schutzeinrichtungen entfernt und auf den anstehenden Arbeitsprozeß eingestellt. Während dieser Zeit ist es unnötig den Antriebsmotor mit erhöhter Drehzahl zu betreiben. Dieses wird automatisch von dem beschriebenen Verfahren erreicht.

Eine Vorrichtung, die zur Durchführung der erfindungsgemäßen Verfahren geeignet wäre, sollte zur Ermittlung der Drehzahlvorgabe an den Antriebsmotor mit Mitteln in Verbindung stehen, die die Vorgabe der Fahrgeschwindigkeit und eine Transport- oder Straßenfahrt beziehungsweise den Arbeitsbetrieb anzeigen. Viele Verstellungen in der Arbeitsmaschine können durch elektronisch gesteuerte Einrichtungen ausgeführt werden. Die Vorgabe der Fahrgeschwindigkeit kann verschiedenartig ausgeführt sein und wird bevorzugt durch einen Fahrhebel vorgenommen. Die Stellung des Fahrhebels wird in dem einfachsten Fall in der Neutralstellung durch einen Schalter abgefragt. In weiteren Ausgestaltungen kann die Stellung des Fahrhebels bei verschiedenen Auslenkungen mittels Schaltern oder auch über den einen Verstellbereich durch ein Potentiometer erfaßt. Die Fahrgeschwindigkeitsvorgabe steht der Vorrichtung über bekannte elektrische Übertragungsmittel, wie beispielsweise über ein Fahrzeugbussystem zur Verfügung. Eine solche Vorrichtung würde außerdem mit Mitteln verbunden, welche es ermöglichen einen Wechsel der Arbeitsmaschine vom Arbeitsbetrieb in den Transport- oder Straßenbetrieb und umgekehrt zu erkennen. Dieses kann ein einfacher Schalter sein, der sich in der Armatur des Arbeitsfahrzeuges befindet und von dem Bediener bei Bedarf betätigt wird.
Des weiteren könnte der jeweilige Wechsel der Arbeitsmaschine zwischen einem Arbeitseinsatz und einem Transport- oder Straßeneinsatz, anhand von mindestens einer Stellung oder einer Kombination von Stellungen verschiedener Arbeitsorgane automatisch erkannt werden. Die Vorrichtung würde dazu mit den Mitteln verbunden sein, die die Stellung der Arbeitsorgane mitteilen. Beispielsweise wird der Vorrichtung die Stellung des Getriebeschalthebels angezeigt. Entsprechend der Arbeitsmaschine wird der Vorrichtung die Arbeitsorganstellungen mitgeteilt, die sich einzeln oder auch in einer bestimmten Kombination mit andern Arbeitsorganstellungen dem jeweiligen Einsatzfall der Arbeitsmaschine zuordnen lassen. An einem Mähdrescher sind das beispielsweise die Stellung der Korntankerweiterung oder die Stellung des Getriebeschalthebels oder die Stellung von Antriebskupplungen oder allgemein die Stellung von Schaltern in der Bedienungsarmatur. Sind beispielsweise die Arbeitsorgane wie die Dreschtrommel abgeschaltet, die Korntankerweiterung eingefahren und der Straßengang eingelegt, ist davon auszugehen, daß der Mähdrescher für ein Straßenfahrt vorbereitet wurde. Der Vorrichtung an einem Feldhäcksler kann beispielsweise die Stellung des Auswurfkrümmers oder die Transportstellung des Vorsatzgerätes oder die Getriebeschalthebelstellung mitgeteilt werden. Befindet sich der Auswurfkrümmer nicht in der Transportstellung und ist der Straßenfahrgang nicht eingelegt so erkennt die Vorrichtung, daß sich der Feldhäcksler im Arbeitseinsatz befindet.
Durch diese Vorrichtung wird der Kraftstoffverbrauch und die Lärmbelästigung der Umwelt durch eine automatisierte Vorgabe der vorteilhaften Antriebsmotordrehzahl nach den erfindungsgemäßen Verfahren reduziert.

Die Erfindung soll anhand der folgenden Figuren näher erläutert werden. Es zeigen:
- Figur 1 eine Seitenansicht eines selbstfahrenden Feldhäckslers,
- Figur 2 den schematischen Antriebsaufbau einer selbstfahrenden Arbeitsmaschine,
- Figur 3 verschiedene Kennlinien zwischen der Vorgabe der Fahrgeschwindigkeit und der Motordrehzahl in Vorfahrtrichtung der Arbeitsmaschine und
- Figur 4 weitere Kennlinien für beide Fahrtrichtungen.

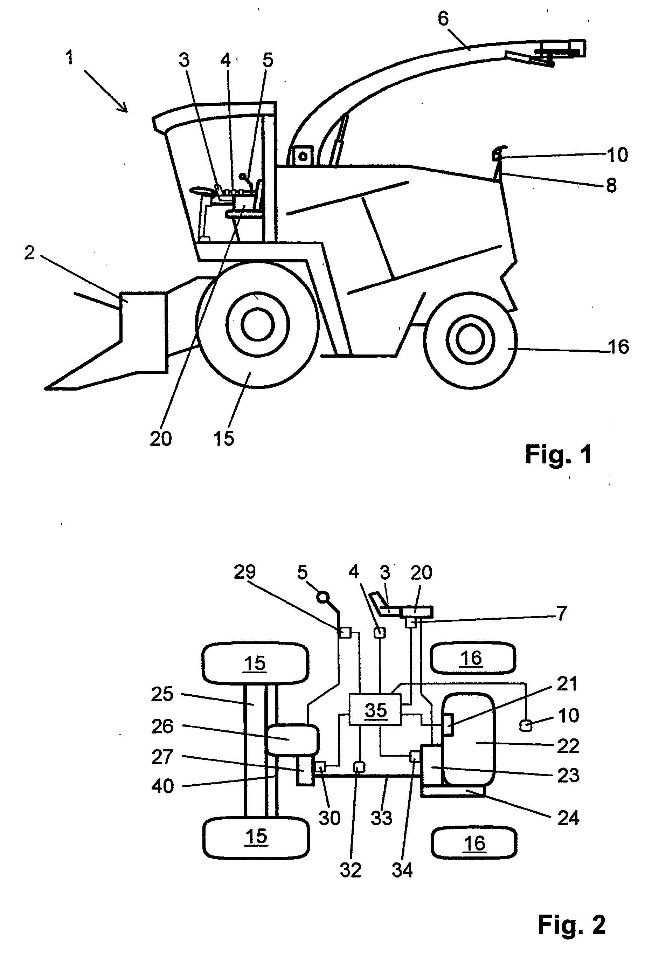

Figur 1 zeigt einen selbstfahrenden Feldhäcksler 1, welcher im Arbeitsbetrieb mit dem Vorsatzgerät 2 Erntegut von einem Bearbeitungsfeld aufnimmt, es häckselt und mittels einer Überladeeinrichtung 6 an einen Transportfahrzeug abgibt. Während dem Transport- oder Straßenbetrieb, wird diese Überladeeinrichtung 6 auf einem Haltebügel 8 abgelegt. An dem Haltebügel 8 ist ein Sensor 10 angebracht, der die Transport stellung der Überladeeinrichtung 6 erfasst. Der gezeigte selbstfahrende Feldhäcksler 1 ist ein landwirtschaftliche Arbeitsmaschine, welches über die Antriebsräder 15 angetrieben und mittels der Lenkräder 16 gelenkt wird, wobei die Lenkräder 16 bei Bedarf zusätzlich mit einem Antrieb ausgestattet sein können. Der Maschinenbediener kann im normalen Arbeitsbetrieb die Motordrehzahl mittels eines Bedienelementes 4, welches in der Fahrerkabine des selbstfahrenden Feldhäckslers 1 angeordnet ist, vorwählen. Zur Sicherstellung eines optimalen Arbeitsprozesses ist eine annähernd konstanten Motordrehzahlvorgabe notwendig. Der selbstfahrende Feldhäcksler 1 ist daher mit einem einfachen Schalter ausgestattet, mittels welchem der Maschinenbediener lediglich zwischen der Leerlaufdrehzahl und der für den Arbeitsprozess erforderlichen höheren Motordrehzahl wählen kann. Eine zu niedrig gewählte Motordrehzahl im Arbeitsbetrieb wird daher ausgeschlossen.
Die Fahrgeschwindigkeit wird während des Arbeitsprozesses durch eine Fahrstufenauswahl, mittels des Hebels 5 zur Auswahl einer Getriebeübersetzung und dem Fahrhebel 3, zur stufenlosen Variation der Fahrgeschwindigkeit in dem ausgewählten Fahrbereich, vorgegeben. Dabei wird die Motordrehzahl im Arbeitsbetrieb, wie schon erwähnt, als konstant vorgegeben. In der dargestellten Fahrerkabine befindet sich ein Sitz mit einer seitlichen Armlehne 20, in welcher ein in Fahrtrichtung horizontal verschiebbarer Fahrhebel 3 angeordnet ist. Mittels dieses Fahrhebels 3 kann der Maschinenbediener die gewünschte Fahrtrichtung und gewünschte Fahrgeschwindigkeit vorgeben, indem er den Fahrhebel 3 in Richtung seines Fahrtrichtungswunsches aus der Mittelstellung so weit heraus bewegt, bis der selbstfahrende Feldhäcksler 1, die von Ihm gewünschte Fahrgeschwindigkeit erreicht hat.

In Figur 2 wird ein schematischer Aufbau der Antriebseinrichtung eines selbstfahrenden Feldhäcksler 1 gezeigt. Der Antriebsmotor 22 treibt über ein Getriebe 24 eine direkt an dem Antriebsmotor 22 angeflanschte Hydraulikpumpe 23 an. Die Fördermenge der Hydraulikpumpe 23 wird von der Antriebsdrehzahl und dem Schwenkwinkel der Hydraulikpumpe 23 bestimmt. Die Antriebsdrehzahl wird durch die Drehzahl des Antriebsmotors 22 und der nachgeschalteten Getriebeübersetzung vorgegeben. Der Schwenkwinkel wird mittels einer mechanischen Verbindung zu dem Fahrhebel 3 hin durch die Auslenkung des Fahrhebels 3 in der Armlehne 20 eingestellt. Befindet sich der Fahrhebel 3 in seiner Neutralstellung, wird keine Hydraulikflüssigkeit von der Hydraulikpumpe 23 über die Hydraulikleitung 33 zu dem Hydraulikmotor 27 gefördert und die Arbeitsmaschine wird nicht angetrieben. Der Hydraulikmotor 27 ist direkt mit einem Schaltgetriebe 26 verbunden und treibt die Antriebsräder 15 des selbstfahrenden Feldhäckslers 1 über das Schaltgetriebe 27 und die Antriebswellen 40 an. Die von der Hydraulikpumpe 23 geförderte Hydraulikflüssigkeitsmenge und das sogenannte Schluckvolumen des Hydraulikmotors 27 bestimmen die Eingangsdrehzahl des Schaltgetriebes 27. Ausgangsseitig gibt das Schalt-getriebe 27 eine entsprechend der vorgewählten Übersetzung, welche mittels des Schalthebels 5 und einer mechanischen Verbindung zum Schaltgetriebe 27 eingestellt werden kann, bestimmte Drehzahl beidseitig vom Schaltgetriebe 27 an die Antriebswellen 40 ab. In der Regel besitzt das Schaltgetriebe 26 drei unterschiedliche Übersetzungsstufen, wobei zwei unterschiedliche Übersetzungsstufen mit höherer Übersetzung für den Arbeitsbetrieb und eine Übersetzungsstufe mit geringerer Übersetzung für den Transport- oder Straßenbetrieb vorgesehen sind.
Zur Drehzahlvorgabe an den Antriebsmotor 22 nach den erfindungsgemäßen Verfahren, ist der Antriebsmotor 22 mit einer Steuerung 21 ausgestattet, mittels welcher die von einer elektronischen Auswerteschaltung 35 vorgegebenen, gewünschten Motordrehzahl empfangen und entsprechend eingestellt wird. Die Verbindung zwischen der Steuerung 21 und der elektronischen Auswerteschaltung 35 wird vorteilhaft durch ein elektrisches Bussystem, welches beispielsweise nach dem CAN- Protokoll arbeitet, ausgeführt. Zur Ermittlung der vorzugebenden Antriebsmotordrehzahl, steht die elektronische Auswerteschaltung 35 zumindest mit einem Sensor 29 oder 4 in Verbindung, welcher der elektronischen Auswerteschaltung 35 zumindest anzeigt, daß die Motordrehzahl in Abhängigkeit der in der elektronischen Auswerteschaltung 35 hinterlegten Abhängigkeit, zwischen der Vorgabe der Motordrehzahl und der Vorgabe der Fahrgeschwindigkeit, erfolgen soll. Der Sensor 29 ist mit dem Schaltgestänge oder dem Hebel 5 verbunden und zeigt der elektronischen Auswerteschaltung 35 die eingelegte Übersetzungsstufe des Schaltgetriebes 26 für beispielsweise die Transport- oder Straßenfahrt an. Der Sensor 4 ist ein Bedienelement in der Bedienerkonsole oder an dem Fahrhebel 3 in der Fahrerkabine des selbstfahrenden Feldhäckslers 1, mittels welchem die elektronische Auswerteschaltung 35 aktiviert oder deaktiviert werden kann. Im Arbeitsbetrieb des selbstfahrenden Feldhäckslers 1 kann der Sensor 4 als einfacher Schalter ausgeführt sein und zur Vorgabe der Leerlauf- beziehungsweise der Nenndrehzahl dienen. Erkennt die elektronische Auswerteschaltung 35 über den Sensor 29 die eingelegte Übersetzungsstufe des Schaltgetriebes 26 für den Transport- oder Straßenfahrt, so kann in Verbindung mit dem Sensor 4, die automatische Aktivierung der erfindungsgemäße Drehzahlvorgabe an den Antriebsmotor 22 zusätzlich von der Stellung des als Schalter ausgeführten Sensors 4 abhängig gemacht werden. Der Sensor 4 steht stellvertretend für die manuelle Eingabemöglichkeit von Informationen oder Eingaben von Werten an die elektronische Auswerteschaltung 35 wie beispielsweise die Auswahl einer Kennlinie und kann daher aus einem einzelnen Schalter, Wahlschalter oder aus mehreren Schaltern oder aus einer Kombination aus Schaltern und Potentiometern oder von einem Terminal gebildet werden. Der Sensor 10 ermittelt die Transportstellung der Überladeeinrichtung 6 und dient zur automatischen Erkennung eines Wechselt zwischen dem Arbeitsbetrieb in den Transport- oder Straßenbetrieb und umgekehrt. Ist das Abernten eines Feldstückes beendet, wird die Überladeeinrichtung 6 auf den Haltebügel 8 abgelegt. Dadurch wird die Fahrzeughöhe des selbstfahrenden Feldhäckslers 1 reduziert und zusätzlich die Schwenk- und Halteeinrichtung der Überladeeinrichtung 6 von unnötigen mechanischen Beanspruchungen bei dem Transport- oder Straßenbetrieb entlastet. Wird ein Wechsel von dem Arbeitsbetrieb in den Transport- oder Straßenbetrieb erkannt, beispielsweise durch eine Betätigung des Sensors 10 in der Transportstellung der Überladeeinrichtung 6, wird automatisch eine zu der Vorgabe der Arbeitsdrehzahl des selbstfahrenden Feldhäckslers 1 niedrigere Drehzahl von der elektronischen Auswerteschaltung 35 an den Antriebsmotor 22 vorgegeben. Eine höhere Drehzahl des Antriebsmotors kann nachfolgend jederzeit, durch eine Betätigung des Bedienelementes 4, von dem Maschinenbediener vorgewählt werden. Findet dann zusätzlich eine Wechsel der Übersetzungsstufe des Schaltgetriebes 26 in den Transport- oder Straßengang statt, wird dies an die elektronischen Auswerteschaltung 35 durch den Sensor 29 übermittelt. Die Vorgabe der Drehzahl an den Antriebsmotor 22 erfolgt dann automatisch in erfindungsgemäßer Weise, indem die Stellung des Fahrhebel 3 bezogen auf die Armlehne 20 von einem Sensor 7 ermittelt und der elektronischen Auswerteschaltung 35 angezeigt wird. Der Sensor 7 kann eine einfacher Schalter zur Erfassung der Mittelstellung beziehungsweise der Neutralstellung des Fahrhebels 3 oder ein Sensor sein, der zumindest in dem gewünschten Bereich der relativen Stellung des Fahrhebels 3 zur Armlehne 20, eine Erfassung der relativen Stellung und die erfindungsgemäße Drehzahlvorgabe an den Antriebsmotor 22 ermöglicht.
Die elektronische Auswerteschaltung 35 steht ferner mit Sensoren und Einrichtungen zur Erfassung und Beeinflussung der hydraulischen Antriebseinrichtung 23, 27 in Verbindung. Der Hydraulikmotor 27 ist mit einer Einstell- und Erfassungseinrichtung 30 ausgestattet, mittels welcher das Schluckvolumen des Hydraulikmotors 27 eingestellt und erfaßt werden kann. Zusätzliche wird der Druck in der Hydraulikleitung 33 von einem Sensor 32 ermittelt und der elektronischen Auswerteeinrichtung 35 übermittelt. Eine Einstell- und Erfassungseinrichtung 34 steht ferner direkt mit der Hydraulikpumpe 23 in Verbindung, mittels welcher die Fördermenge eingestellt und erfasst werden kann. Diese Einrichtungen zur Erfassung und Beeinflussung der hydraulischen Antriebseinrichtung kommuniziert vorteilsweise mittels eines Bussystems mit der elektronischen Auswerteschaltung 35. Mittels dieser Einrichtungen 30, 32 und 34 wird der elektronischen Auswerteschaltung 35 ermöglicht, die von dem Maschinenbediener, durch die relative Stellung des Fahrhebel zur Armlehne 20 vorgegebene Fahrgeschwindigkeit unter Beachtung des Kraftstoffverbrauchs sowie der Lärmbelästigung der Umwelt optimal einzustellen. Aus den bekannten Drehzahlen, den Förder- und Schluckvolumina des hydrostatischen Antriebes sowie der bekannten Übersetzungsverhältnissen der Übersetzungsstufe des Getriebes 26, wird von der elektronischen Auswerteschaltung 35 eine gewünschte Fahrgeschwindigkeitsvorgabe v abgeleitet. Die tatsächliche Fahrgeschwindigkeit des selbstfahrenden Feldhäckslers 1 kann zusätzlich erfaßt werden, wird aber in dem dargestellten Beispiel nicht erfaßt und hat keinen Einfluß auf die Drehzahlvorgabe nm an den Antriebsmotor 22. Hierdurch entsteht für den Maschinenbediener das gewohnte Fahrgefühl, indem bei einer sich ändernden Fahrleistungsanforderung an den Fahrantrieb keine automatische Fahrgeschwindigkeitsregelung mit entsprechenden Drehzahlvariationen des Antriebsmotors entstehen und die Motordrehzahl durch diese wie gewöhnlich entsprechend der Anforderung erhöht oder verringert wird. Änderungen der Leistungsanforderung des Fahrantriebs können bei Transport- oder Straßenfahrt anhand einer Motordrehzahldrückung, durch eine Druckmessung im hydraulischen Antriebssystem oder durch eine endsprechende Drehmomentmessung im mechanischen Antriebsstrang ermittelt werden. Der elektronischen Auswerteschaltung 35 können diese Leistungsanforderungen durch entsprechende Mittel, wie beispielsweise mittels eines Fahrzeugbussystems mitgeteilt werden. Eine entsprechende Reaktion auf die entsprechende Anforderung erfolgt aber erfindungsgemäß von der elektronischen Auswerteschaltung 35 nur anhand von vorgegebenen Kennlinien, die in der elektronischen Auswerteschaltung 35 hinterlegt sind, indem die Einstellung des hydrostatischen Antriebssystems 23, 27, 33, durch eine Variation des Schluckvolumens beziehungsweise Fördervolumens der jeweiligen Einheiten 30, 34 entsprechend angepasst wird, wobei auch die Variation von nur einer Einheit 30 oder 34 durchaus denkbar ist.

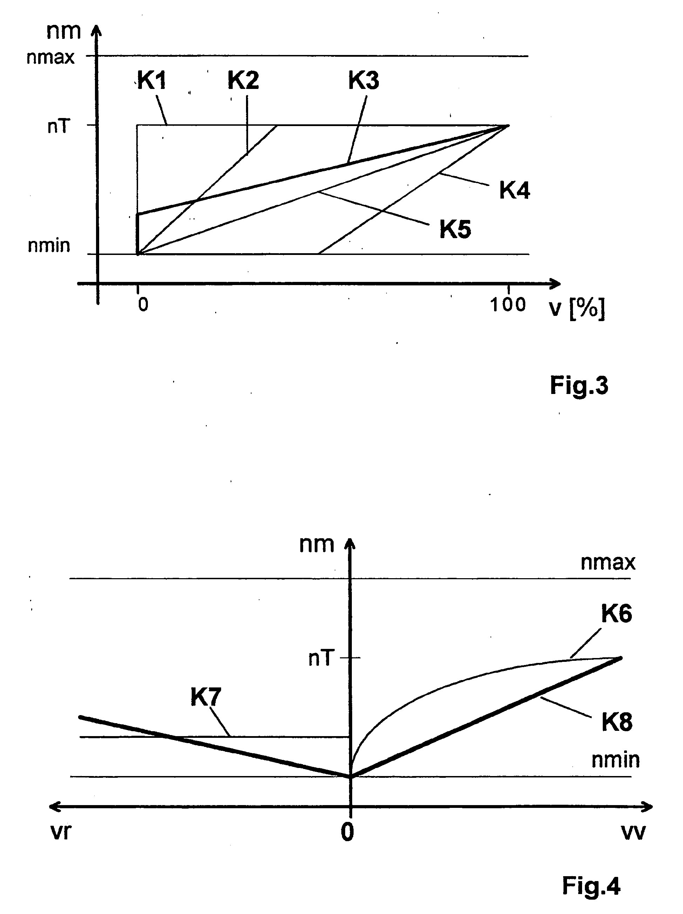

In der Figur 3 werden verschiedene Kennlinien K1 bis K5 dargestellt, welche jeweils den erfindungsgemäßen Zusammenhang zwischen der Fahrgeschwindigkeitsvorgabe v und der Antriebsmotordrehzahlvorgabe nm nach unterschiedlichen Verfahren zeigt. Die Vorgabe der Fahrgeschwindigkeit v erfolgt, nach dem in den Figuren 1 und 2 dargestellten Beispiel, anhand der Auslenkung des Fahrhebel 3 in der Armlehne 20 des Sitzes, auf welchem sich der Maschinenbediener während dem Arbeits- und Transport- oder Straßenbetrieb befindet. Im Arbeitsbetrieb wird diese Auslenkung direkt in ein entsprechendes Fördervolumen der Hydraulikpumpe 23 beziehungsweise in ein entsprechendes Schluckvolumen des Hydraulikmotors 27, bei konstanter Drehzahlvorgabe an den Antriebsmotor 22, umgesetzt. Wird jedoch von der elektronischen Auswerteschaltung 35 ein Transport- oder Straßenbetrieb erkannt, so wird die Vorgabe der Antriebsmotordrehzahl nm in Abhängigkeit der Vorgabe der Fahrgeschwindigkeit v anhand zumindest einer in der elektronischen Auswerteschaltung 35 abgelegten Kennlinie vorgegeben. Der Antriebsmotor 22 kann durch die Motorsteuerung 21 in der Drehzahl zwischen einer Leerlaufdrehzahl nmin und einer maximalen Drehzahl nmax variiert werden. In Figur 3 wird die Fahrgeschwindigkeitsvorgabe v nur in Prozent angegeben, da sich die Anwendung des erfindungsgemäßen Verfahrens nicht auf einen bestimmten Fahrgeschwindigkeitbereich beschränkt. Landwirtschaftliche selbstfahrende Fahrzeuge haben einen Fahrgeschwindigkeitsbereich von 0 bis 20 km/h mit zunehmender Tendenz bis zu 40 km/h.
Die dargestellten Kennlinien K1 bis K5 haben einen gemeinsamen Ursprung und einen gemeinsamen Endpunkt. Bei einem sich in der Mittelstellung oder Neutralstellung befindlichen Fahrhebel 3, welches einer Vorgabe der Fahrgeschwindigkeit v von 0% oder dem Stillstand der Arbeitsmaschine entspricht, wird von der elektronischen Auswerteschaltung 35 die Leerlaufdrehzahl nmin an den Antriebsmotor 22 vorgegeben. Dabei mag es sicherlich Anwendungsfälle geben, bei denen die untere vorgewählte Drehzahlvorgabe nmin oberhalb der Leerlaufdrehzahl des Antreibsmotors 22, beispielsweise zur Sicherstellung von Arbeitsfunktionen im Stillstand der Arbeitsmaschine, vorgewählt werden sollte. Das Vorwählen einer minimalen Drehzahl bei Stillstand der Arbeitsmaschine, entspricht einem minimalen Kraftstoffverbrauch und einer geringen Lärmbelästigung der Umwelt. Der Endpunkt der Kennlinien wird durch die maximale Leistungsanforderung der Antriebseinrichtung bei maximaler Fahrgeschwindigkeitsvorgabe v Fahrgeschwindigkeitsvorgabe v bestimmt. Zwischen diesen beiden Punkten lassen sich verschiedene Kennlinien für die jeweils gewünschten Anwendungsfällen generieren und in der elektronischen Auswerteschaltung 35 zur Auswahl oder entsprechend der Anwendung dort abspeichern. Kennlinie K1 zeigt die einfachste Anwendung des erfindungsgemäßen Verfahrens, welche schon eine enorme Einsparung von Kraftstoff und eine Verringerung der Lärmbelästigung einbringt. Hierfür ist der Fahrhebel 3 nur mit einem einfachen Schalter 7 ausgestattet, welcher die Neutralstellung des Fahrhebels 3 erfasst und an die elektronische Auswerteschaltung 35 übermittelt. Diese Stellung des Fahrhebels 3 wird von dem Maschinenbediener für einen Stillstand des selbstfahrenden Feldhäckslers, beispielsweise an eine Einmündung oder roten Ampel sowie während der Umrüstung der Arbeitsmaschine vom Straßenbetrieb zum Arbeitsbetrieb oder umgekehrt vorgewählt. Lediglich bei einer Vorgabe der Fahrgeschwindigkeit v=0%, wird dann die Drehzahl des Antriebsmotors 22 auf eine minimale Drehzahl nmin vorgegeben. Bewegt der Maschinenbediener den Fahrhebel 3 aus der Neutralstellung, wird sofort eine höhere Drehzahl nT, die der Leistungsanforderung bei maximaler Fahrgeschwindigkeitsvorgabe v entspricht, vorgegeben.
Die Kennlinie K2 zeigt eine weitere Kennlinie, bei welcher die Drehzahlvorgabe nm an den Antriebsmotor 22 abhängig von der Fahrgeschwindigkeitsvorgabe v in dargestellter Weise nur in einem Bereich der Fahrgeschwindigkeitsvorgabe von v=0% bis beispielsweise 40 % proportional von nmin nach nT verändert vorgegeben wird. In dem anschließenden Bereich von v= 40% bis 100% wird die Vorgabe der Motordrehzahl nm nicht mehr verändert. Der Sensor 7 zur Ermittlung der Auslenkung des Fahrhebels 3, muß daher nicht über den gesamten Stellweg des Fahrhebels 3 die Auslenkung ermitteln und kann kostengünstiger ausgeführt werden. Durch diese Vorgabe der Drehzahl nm an den Antriebsmotor 22 wird eine erhöhte Beschleunigung des selbstfahrenden Feldhäckslers 1 aus dem Stillstand erreicht, da in dem ersten Fahrbereich von v= 0 bis 40% die Fördermenge der Hydraulikpumpe 23 und die Drehzahl den Antriebsmotors gleichzeitig erhöht wird.
Kennlinie K3 verursacht einen sprunghaften Anstieg der Drehzahlvorgabe nm an den Antriebsmotor 22 dann, wenn der Maschinenbediener den Fahrhebel 3 aus der Neutralstellung herausbewegt. Anschließend erfolgt die Drehzahlvorgabe nm an den Antriebsmotor 22 proportional der Fahrgeschwindigkeitsvorgabe v. Hierdurch wird ein erhöhtes Anfahrmoment während des Anfahrvorgangs des selbstfahrenden Feldhäckslers 1 zur Verfügung gestellt, indem im Anfahrmoment ein erhöhtes Moment, durch die höhere Vorgabe der Motordrehzahl von dem hydraulischen Antriebssystems abgegeben werden kann. Die Vorgabe der Drehzahl nm an den Antriebsmotor 22 erfolgt mittels des Fahrhebels 3, indem eine weitere Auslenkung des Fahrhebels 3 auch eine weitere Erhöhung der Vorgabe der Drehzahl nm hervorruft. Durch dieses Verfahren, anhand der Kennlinie K3, wird im Stillstand der Arbeitsmaschine minimaler Kraftstoff verbraucht und wenig Lärm produziert, ein zügiges Anfahren des selbstfahrenden Felshäckslers 1 erreicht und im Fahrbetrieb eine angepasste Kraftstoff- und Lärmmenge erzeugt. In Figur 3 zeigt die Kennlinie K4 eine weitere mögliche Vorgabe der Drehzahl nm an den Antriebsmotor 22 in Abhängigkeit der Fahrgeschwindigkeitsvorgabe v, welche sich besonders für den Rangierbetrieb eignet. Bei der Vorgabe des Stillstandes der Arbeitsmaschine (v= 0%) wird an den Antriebsmotor 22 die Leerlaufdrehzahl nmin vorgegeben und diese auch für einen Bereich der Fahrgeschwindigkeitsvorgabe v bis beispielsweise v=50% beibehalten. Anschließend erfolgt die Vorgabe der Drehzahl nm an der Antriebsmotor 22 proportional der Vorgabe der Fahrgeschwindigkeit v bis hin zur Drehzahlvorgabe nmax bei einer Fahrgeschwindigkeitsvorgabe v= 100%. Hierdurch lassen sich Rangierarbeiten im Transport- und Straßenbetrieb der Arbeitsmaschine mit niedriger Drehzahl nm des Antriebsmotors 22 durchführen, ohne dabei hohe Beschleunigung der Arbeitsmaschine erreichen zu wollen. Der Kraftstoffverbrauch wird reduziert und die Umwelt vor unnötigem Lärm verschont.
Kennlinie K5 zeigt eine einfache Form der erfindungsgemäßen Anwendung des Verfahrens. Die Drehzahlvorgabe nm an den Antriebsmotor 22 erfolgt über den gesamten Fahrgeschwindigkeitsvorgabebereich von v= 0% bis 100% anhand eines proportionalen Zusammenhangs. Dieser Zusammenhang ist ein besonders für den Maschinenbediener nachvollziehbarer Zusammenhang, da die Drehzahl des Antriebsmotors 22 direkt dem Fahrgeschwindigkeitswunsch v folgt. Eine Vergrößerung der Fahrgeschwindigkeitsvorgabe v, durch beispielsweise eine weitere Auslenkung des Fahrhebels 3 aus der Neutralstellung, hat eine Erhöhung des Förder- beziehungsweise Verringerung des Schluckvolumens der hydraulischen Antriebseinrichtungen 23, 27 und eine Erhöhung der Drehzahl des Antriebsmotors zu Folge.
Für die Rückwärtsfahrt können alle Kennlinien K1 - K6 im zweiten Quadrant des Koordinatensystems durch eine konstante Vorgabe einer Drehzahl nm an den Antriebsmotor erweitert werden. Die in dieser Figur 3 dargestellten Kennlinien K1- K5 können aber auch für den Fahrbereich in entgegengesetzter Fahrtrichtung, also für die Rückwärtsfahrt verwendet werden. Dazu sind die dargestellten Kennlinien K1 - K5 an der Ordinate nm gespiegelt in dem zweiten Quadranten darzustellen, wobei für die Rückwärtsfahrt durchaus eine von der Vorwärtsfahrt unterschiedliche Kennlinie Verwendung finden kann.

Figur 4 zeigt weitere Kennlinien K6 bis K8 für die Drehzahlvorgabe an den Antriebsmotor bei Vorwärts- und Rückwärtsfahrt des selbstfahrenden Feldhäckslers 1. Die Kennlinie K6 zeigt einen unliniearen Zusammenhang der Drehzahlvorgabe nm in Abhängikeit der Fahrgeschwindigkeitsvorgabe v. So ist es bei Vorwärtsfahrt vorgesehen, daß beginnend von der Neutralstellung beziehungsweise dem Stillstand der Arbeitsmaschine aus, die Drehzahlvorgabe nm anfänglich eine größere Änderung erfährt, diese aber mit zunehmender Fahrgeschwindigkeitsvorgabe v bis hin zu Null verringert wird. Kennlinie K6 stellt somit eine Kombination der Kennlinien K2 und K3 dar und hat den zusätzlichen Vorteil, daß es keine sprunghaften Änderungen bei der Drehzahlvorgabe nm an den Antreibsmotor 22 gibt. Diese Kennlinie K6 ergibt ein höheres Anfahrmoment mit abnehmender Beschleunigung der Arbeitsmaschine bei zunehmender Fahrgeschwindigkeitsvorgabe vv, ohne einen für den Maschinenbediener merklichen Übergang. Man beachte, daß hierbei, wie auch mit anderen Kennlinien, die mit der Fahrhebel 3 vorgegebene Fahrgeschwindigkeitsvorgabe vv nicht die tatsächliche Fahrgeschwindigkeit der selbstfahrenden Arbeitsmaschine direkt vorgibt, sondern sich diese aus den Einstellungen der Antriebseinrichtungen 23, 24, 26 und 26 sowie der Drehzahl des Antriebsmotors 22 ergibt. Wird in der Antriebseinrichtung ausschließlich das Fördervolumen der Hydraulikpumpe 23 direkt proportional der Auslenkung des Fahrhebel 3 aus der Neutralstellung vorgegeben, so ergibt dies, in Verbindung mit der Vorgabe der Drehzahl nm an den Antriebsmotor 22 anhand der Kennlinie K6, einen Fahrgeschwindigkeitsverlauf der Arbeitsmaschine, welcher anfänglich mehr von der Drehzahländerung des Antriebsmotors 22 und zunehmend mehr von der Einstellung der Hydraulikpumpe 23 durch die Summe beider Änderungen bestimmt wird. Bei der Rückwärtsfahrt vr, kann die Drehzahlvorgabe nm an den Antriebsmotor 22 in der Neutralstellung des Fahrhebels 3 auf die Leerlaufdrehzahl nmin abgesenkt werden und dann sprunghaft, bei einer Auslenkung des Fahrhebels 3, nach der Kennlinie K7 konstant erhöht werden.
Die in der Figur 4 enthaltene Kennlinie K8 zeigt eine durchgängige Kennlinie in beiden Fahrtrichtungen. In beiden Fahrbereichen, wird die Drehzahlvorgabe nm proportional der Fahrgeschwindigkeitsvorgabe vv und vr vorgegeben, wobei die maximal mögliche Motordrehzahl bei maximaler Fahrgeschwindigskeitsvorgabe in der jeweiligen Fahrtrichtung unterschiedlich hoch ist. Durch diese Kennlinie K8 folgt die tatsächliche Fahrgeschwindigkeit der Arbeitsmaschine in beiden Fahrtrichtungen der Fahrgeschwindigkeitsvorgabe vr, vv durch den Fahrhebel 3 proportional abhängig.

Das erfindungsgemäße Verfahren beschränkt sich nicht nur auf die ausgeführten Beispiele und Anwendungsbereiche. Es ist dem einschlägigen Fachmann durchaus bekannt die Ermittlung und Übertragung der einzelnen, für die Anwendungen des Verfahrens notwendigen Vorrichtungen und Sensoren auch auf nicht beschriebener aber bekannter Weise auszuführen. So ist es durchaus denkbar, daß ein Fachmann die Fahrhebelauslenkung der Fahrgeschwindigkeit direkt zuordnet und die Drehzahl des Antriebsmotors beziehungsweise die Einstellungen der Antriebseinrichtungen anhand der vorgeschlagenen Kennlinien automatisch so von der elektronischen Auswerteschaltung vorgenommen werden, daß die Fahrgeschwindigkeit durch eine entsprechende Variation der Einstellmöglichkeiten unter Berücksichtigung eines optimalen Kraftstoffverbrauchs und einer entsprechend minimalen Lärmerzeugung erreicht wird.

## Patentansprüche

1. Verfahren zur Drehzahlvorgabe an einen Antriebsmotor an Arbeitsmaschinen, insbesondere selbstfahrende Erntemaschinen, die im Arbeitsbetrieb mit konstanter Antriebsdrehzahlvorgabe betrieben werden, wobei der Antriebsmotor mindestens eine Einrichtung zur Regelung der Motordrehzahl besitzt und die Fahrgeschwindigkeit der Arbeitsmaschine unabhängig der Drehzahl des Antriebsmotors einstellbar ist,
**dadurch gekennzeichnet, dass**
die Drehzahlvorgabe an den Antriebsmotor bei Transport- oder Straßenfahrt der Arbeitsmaschine automatisch in Abhängigkeit der Vorgabe der Fahrgeschwindigkeit erfolgt, wobei verschiedene Kennlinien jeweils den Zusammenhand zwischen der Fahrgeschwindigkeitsvorgabe v und der Antriebsmotordrehzahlvorgabe nm vorgeben und Antriebsleistungsänderungsanforderungen an den Fahrantrieb eine Änderung der Drehzahlvorgabe an den Antriebsmotor bewirken und wobei Antriebsleistungsänderungsanforderungen des Fahrantriebes anhand einer Motordrehzahldrückung, durch eine Druckmessung im hydraulischen Antriebssystem oder durch eine entsprechende Drehmomentmessung im mechanischen Antriebsstrang bestimmt werden.

2. Verfahren nach Anspruch 1,
**dadurch gekennzeichnet,**
**dass** die Kennlinien einen gemeinsamen Ursprung und einen gemeinsamen Endpunkt haben.

3. Verfahren nach einem der Ansprüche 1 oder 2,
**dadurch gekennzeichnet,**
**dass** der Ursprung der wenigstens einen Kennlinie eine oberhalb der Leerlaufdrehzahl des Antriebsmotors liegende Drehzahlvorgabe ist.

4. Verfahren nach einem der vorhergehenden Ansprüche 1 bis 3,
**dadurch gekennzeichnet,**
**dass** der Endpunkt der wenigstens einen Kennlinie durch die maximale Leistungsanforderung der Antriebseinrichtung bei maximaler Fahrgeschwindigkeitsvorgabe v bestimmt wird.

5. Verfahren nach mindestens einem der vorherigen Ansprüche,
**dadurch gekennzeichnet, daß**
bei der Drehzahlvorgabe an den Antriebsmotors, zusätzlich die Belastung des Fahrantriebes ermittelt und bei der Drehzahlvorgabe derart berücksichtigt wird, daß sich bei einer erhöhenden Antriebsleistungsanforderung an den Antriebsstrang die Drehzahlvorgabe für den Antriebsmotor derart erhöht und gleichzeitig die Fördermenge des hydraulischen Fahrantriebes derart verringert, daß die Vorgabe der Fahrgeschwindigkeit von der Arbeitsmaschine bestmöglichst erreicht wird.

6. Verfahren nach mindestens einem der vorherigen Ansprüche,
**dadurch gekennzeichnet, daß**
bei der Drehzahlvorgabe an den Antriebsmotors, zusätzlich die Belastung des Fahrantriebes ermittelt und bei der Drehzahlvorgabe derart berücksichtigt wird, daß sich bei einer verringernden Antriebsleistungsanforderung an den Antriebsstrang die Drehzahlvorgabe für den Antriebsmotor derart verringert und gleichzeitig die Fördermenge des hydraulischen Fahrantriebes derart erhöht, daß die Vorgabe der Fahrgeschwindigkeit von der Arbeitsmaschine bestmöglichst eingehalten wird.

7. Verfahren nach mindestens einem der Ansprüche 1 bis 6,
**dadurch gekennzeichnet, daß**
die Drehzahlvorgabe an den Antriebsmotor so vorgegeben wird, daß die Vorgabe der Fahrgeschwindigkeit der Arbeitsmaschine proportional der Fahrhebelstellung, in Bezug auf die Neutralstellung des Fahrhebels ist.

8. Verfahren nach mindestens einem der vorhergehenden Ansprüche,
**dadurch gekennzeichnet, daß**
die Drehzahlvorgabe an den Antriebsmotor nur bei der Auswahl von den für die Transport- oder Straßenfahrt vorgesehenen Fahrbereichen in Abhängigkeit von der Vorgabe der Fahrgeschwindigkeit vorgegeben wird.

9. Verfahren nach mindestens einem der vorhergehenden Ansprüche,
**dadurch gekennzeichnet, daß**
die Drehzahlvorgabe an den Antriebsmotor nur in Vorwärtsfahrt der Arbeitsmaschine in Abhängigkeit der Vorgabe der Fahrgeschwindigkeit erfolgt.

10. Verfahren nach einem der vorhergehenden Ansprüche,
**dadurch gekennzeichnet, dass**
nach einem erkannten Wechsel der Arbeitsmaschine aus dem Arbeitsbetrieb in den Transport- oder Straßenbetrieb automatisch die Leerlaufdrehzahl des Antriebsmotors vorgegeben wird.

11. Verfahren nach einem der vorhergehenden Ansprüche,
**dadurch gekennzeichnet, dass**
nach einem erkannten Wechsel der Arbeitsmaschine aus dem Transport- oder Straßenbetrieb in den Arbeitsbetrieb, automatisch die Leerlaufdrehzahl des Antriebsmotors vorgegeben wird.

## Claims

1. A method of presetting a rotary speed on a drive engine on working machines, in particular self-propelled harvesting machines which in the working mode of operation are driven at a constant drive rotary speed presetting, wherein the drive engine has at least one device for regulating the engine speed and the travel speed of the working machine is adjustable independently of the rotary speed of the drive engine,
**characterised in that**
the rotary speed presetting to the drive engine in transport or on-road travel of the working machine is effected automatically in dependence on the presetting of the travel speed, wherein different characteristics respectively predetermine the relationship between the travel speed presetting v and the drive engine rotary speed presetting nm and drive power change demands to the travel drive cause a change in the rotary speed presetting to the drive engine and wherein drive power change demands of the travel drive are determined by means of an engine rotary speed reduction, pressure measurement in the hydraulic drive system or a corresponding torque measurement in the mechanical drive line.

2. A method according to claim 1 **characterised in that** the characteristics have a common origin and a common end point.

3. A method according to one of claims 1 and 2 **characterised in that** the origin of the at least one characteristic is a rotary speed presetting which is above the idle speed of the drive engine.

4. A method according to one of preceding claims 1 to 3 **characterised in that** the end point of the at least one characteristic is determined by the maximum power demand of the drive device at the maximum travel speed presetting v.

5. A method according to at least one of the preceding claims **characterised in that** in relation to the rotary speed presetting to the drive engine the loading of the travel drive is additionally ascertained and in relation to the rotary speed presetting is taken into consideration in such a way that with an increasing drive power demand to the drive line the rotary speed presetting for the drive engine is increased and at the same time the quantitative delivery of the hydraulic travel drive is reduced in such a way that the presetting of the travel speed is achieved in the best possible fashion by the working machine.

6. A method according to at least one of the preceding claims **characterised in that** in relation to the rotary speed presetting to the drive engine the loading of the travel drive is additionally ascertained and in relation to the rotary speed presetting is taken into consideration in such a way that with a decreasing drive power demand to the drive line the rotary speed presetting for the drive engine is reduced and at the same time the quantitative delivery of the hydraulic travel drive is increased in such a way that the presetting of the travel speed is maintained in the best possible fashion by the working machine.

7. A method according to at least one of claims 1 to 6 **characterised in that** the rotary speed presetting to the drive engine is so preset that the presetting of the travel speed of the working machine is proportional to the travel lever position in relation to the neutral position of the travel lever.

8. A method according to at least one of the preceding claims **characterised in that** the rotary speed presetting to the drive engine is preset only in respect of the selection of travel ranges provided for transport or on-road travel in dependence on the presetting of the travel speed.

9. A method according to at least one of the preceding claims **characterised in that** the rotary speed presetting to the drive engine is effected only in forward travel of the working machine in dependence on the presetting of the travel speed.

10. A method according to one of the preceding claims **characterised in that** after a detected change in the working machine from the working mode of operation to the transport or on-road mode the idle speed of the drive engine is automatically preset.

11. A method according to one of the preceding claims **characterised in that** after a detected change in the working machine from the transport or on-road mode operation to the working mode the idle speed of the drive engine is automatically preset.

## Revendications

1. Procédé de prédéfinition de la vitesse de rotation d'un moteur d'entraînement sur des machines productrices à travail, en particulier des moissonneuses automotrices qui en service moteur marchent à une vitesse de rotation d'entraînement prédéfinie constante, le moteur d'entraînement possédant au moins un dispositif de réglage de la vitesse de rotation du moteur et la vitesse de marche de la machine productrice à travail étant réglable indépendamment de la vitesse de rotation du moteur d'entraînement,
**caractérisé en ce que**
la vitesse de rotation prédéfinie du moteur d'entraînement en case de trajet de transport ou sur route de la machine productrice à travail se fait automatiquement en fonction des données prédéfinies de la vitesse de roulage, différentes caractéristiques donnant chaque fois le rapport entre la vitesse de roulage v prédéfinie et la vitesse de rotation prédéfinie du moteur d'entraînement nm et les sollicitations de changement de la puissance d'entraînement sur le système d'entraînement effectuant un changement de la vitesse de rotation prédéfinie du moteur d'entraînement et les sollicitations de changement de la puissance d'entraînement du système d'entraînement étant déterminées à l'aide d'une modération de la vitesse de rotation du moteur, par une mesure de la modération dans le système d'entraînement hydraulique ou par une mesure correspondante du couple dans la chaîne cinématique mécanique.

2. Procédé selon la revendication 1,
**caractérisé en ce que**
les caractéristiques ont une origine commune et un point terminal commun.

3. Procédé selon l'une des revendications 1 ou 2,
**caractérisé en ce que**
l'origine de la au moins une caractéristique est une vitesse de rotation prédéfinie qui se situe au-dessus de la vitesse de rotation au ralenti du moteur d'entraînement.

4. Procédé selon l'une des revendications précédentes 1 à 3,
**caractérisé en ce que**
le point terminal de la au moins une caractéristique est déterminé par la sollicitation maximale de puissance du dispositif d'entraînement dans le cas d'une vitesse de roulage v prédéfinie maximale.

5. Procédé selon au moins l'une des revendications précédentes,
**caractérisé en ce que**
à la vitesse de rotation prédéfinie du moteur d'entraînement, la charge du système d'entraînement est aussi déterminée et est prise en compte dans la vitesse de rotation prédéfinie **en ce que** la vitesse de rotation prédéfinie pour le moteur d'entraînement augmente en cas de sollicitation de la puissance d'entraînement accrue sur la chaîne cinématique de telle sorte, et en même temps que le débit du système d'entraînement hydraulique se voit diminué, que la donnée prédéfinie de la vitesse de roulage de la machine productrice à travail est atteinte à la meilleure des possibilités.

6. Procédé selon au moins l'une des revendications précédentes,
**caractérisé en ce que**
à la vitesse de rotation prédéfinie du moteur d'entraînement, la charge du système d'entraînement est aussi déterminée et est prise en compte dans la vitesse de rotation prédéfinie **en ce que** la vitesse de rotation prédéfinie pour le moteur d'entraînement diminue en cas de sollicitation de la puissance d'entraînement diminuée sur la chaîne cinématique de telle sorte, et en même temps que le débit du système d'entraînement hydraulique se voit augmenté, que la donnée prédéfinie de la vitesse de roulage de la machine productrice à travail est maintenue à la meilleure des possibilités.

7. Procédé selon au moins l'une des revendications 1 à 6,
**caractérisé en ce que**
la vitesse de rotation prédéfinie du moteur d'entraînement est prédéfinie de sorte que la donnée prédéfinie de la vitesse de roulage de la machine productrice à travail est proportionnelle à la position du levier de marche, par rapport à la position neutre du levier de marche.

8. Procédé selon au moins l'une des revendications précédentes,
**caractérisé en ce que**
la vitesse de rotation prédéfinie sur le moteur d'entraînement est donnée uniquement lors de la sélection des zones de marche prévues pour le trajet de transport ou de route en fonction de la donnée prédéfinie de la vitesse de marche.

9. Procédé selon au moins l'une des revendications précédentes,
**caractérisé en ce que**
la vitesse de rotation prédéfinie du moteur d'entraînement ne se fait qu'en marche avant de la machine productrice à travail en fonction de la donnée prédéfinie de la vitesse de marche.

10. Procédé selon l'une des revendications précédentes,
**caractérisé en ce que**
après un changement reconnu de la machine productrice à travail, passant du service moteur à la marche de transport ou de route, la vitesse de rotation au ralenti du moteur d'entraînement est automatiquement prédéfinie.

11. Procédé selon l'une des revendications précédentes,
**caractérisé en ce que**
après un changement reconnu de la machine productrice à travail, passant de la marche de transport à la marche de route en service moteur, la vitesse de rotation au ralenti du moteur d'entraînement est automatiquement prédéfinie.
